# DEMANDE DE BREVET EUROPEEN

(11) **EP 1 359 776 A1**
(43) Date de publication de la demande: **05.11.2003**
(21) Numéro de dépôt: 03291006.9
(22) Date de dépôt: 24.04.2003
(51) Int. Cl.: H04Q 7/30, H04B 7/26

(54) **Procédé de contrôle d'échanges de trames entre une unité de contrôle et au moins une station radio, et unité de contrôle pour la mise en oeuvre du procédé**

(30) Priorité: 30.04.2002 FR 0205454
(71) Demandeur: Nortel Networks Limited, St. Laurent, Quebec H4S 2A9 (CA)
(72) Inventeur: Isnard, Olivier, 78220 Viroflay Cedex (FR); Ratovelomanana, Frédéric, 75018 Paris (FR); Calmel, Jean-Marie, 78000 Versailles (FR); Dijkerman, Robert W., Ottawa, Ontario K2T 1C9 (CA); Tam, Shedman, Ottawa, Ontario K2K 2M1 (CA); Peng, Quanying, Ottawa, Ontario K2A 3X2 (CA); Zhao, Jian G., Ottawa, Ontario K2T 1H3 (CA)
(74) Mandataire: Loisel, Bertrand

(57) **Abrégé**

Chaque station radio (2) a une fenêtre de réception associée à chaque trame, positionnée selon un repère temporel inséré dans ladite trame par une unité de contrôle (1). Les trames incluent des trames de données (5), dans lesquelles le repère temporel est inséré pour la synchronisation avec un terminal radio (4), et des trames de signalisation. Chaque station radio signale une trame de données reçue hors de la fenêtre de réception associée, et répond à une trame de signalisation en retournant à l'unité de contrôle un paramètre de synchronisation représentatif d'un instant de réception de ladite trame de signalisation. Dans une période d'émission de trames de données successives : on émet des trames de signalisation vers chaque station radio simultanément ; on traite les paramètres de synchronisation retournés ; et on asservit les instants d'émission des trames de données successives en fonction des paramètres traités.

## Description

La présente invention concerne les techniques de contrôle d'échanges de trames dans les systèmes de télécommunications et en particulier le contrôle des'instants d'émission et de réception de ces trames.

L'invention trouve notamment application dans la synchronisation des canaux de transport dans les réseaux cellulaires de troisième génération du type UMTS ("Universal Mobile Telecommunication System") normalisés par l'organisation 3GPP ("3^{rd} Generation Partnership Project").

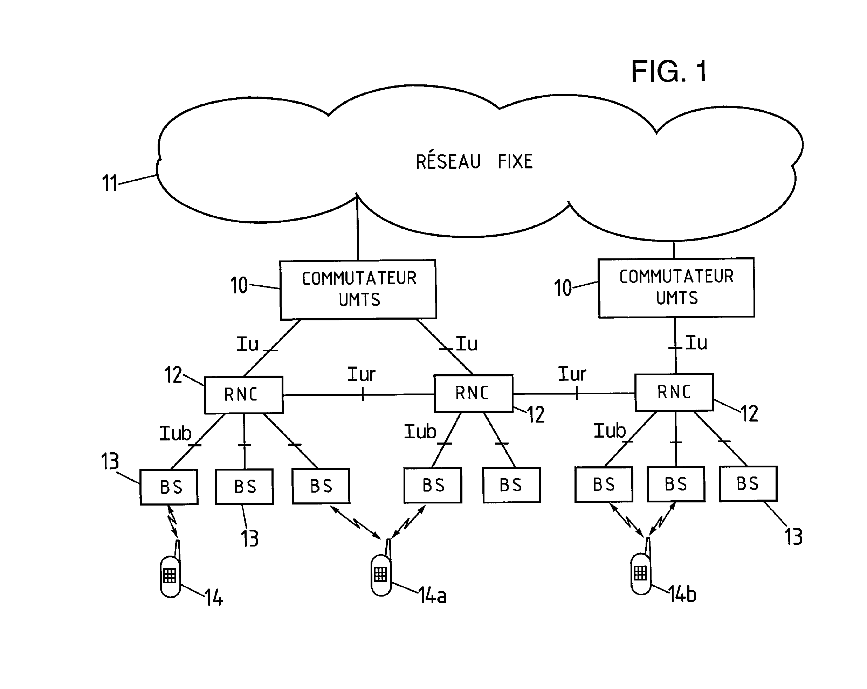

L'invention est décrite ci-après dans son application à un réseau UMTS en mode de duplex fréquentiel (FDD, "Frequency Division Duplex"), dont la figure 1 montre l'architecture.

Les commutateurs du service mobile 10, appartenant un coeur de réseau (CN, "Core Network"), sont reliés d'une part à un ou plusieurs réseaux fixes 11 et d'autre part, au moyen d'une interface dite *lu,* à des unités de contrôle 12, ou RNC ("Radio Network Controller"). Chaque RNC 12 est relié à une ou plusieurs stations radio radio 13 au moyen d'une interface dite *lub.* Les stations radio 13, réparties sur le territoire de couverture du réseau, sont capables de communiquer par radio avec les terminaux mobiles 14, 14a, 14b appelés UE ("User Equipment"). Les stations radio peuvent être regroupées pour former des noeuds appelés "node B". Certains RNC 12 peuvent en outre communiquer entre eux au moyen d'une interface dite *lur*. Les RNC et les stations radio forment un réseau d'accès appelé UTRAN (« UMTS Terrestrial Radio Access Network »).

L'UTRAN comporte des éléments des couches 1 et 2 du modèle ISO en vue de fournir les liaisons requises sur l'interface radio (appelée *Uu*), et un étage 15A de contrôle des ressources radio (RRC, "Radio Resource Control") appartenant à la couche 3, ainsi qu'il est décrit dans la spécification technique 3G TS 25.301, "Radio Interface Protocol Architecture", version 4.2.0 publiée en décembre 2001 par le 3GPP. Vu des couches supérieures, l'UTRAN agit simplement comme relais entre l'UE et le CN.

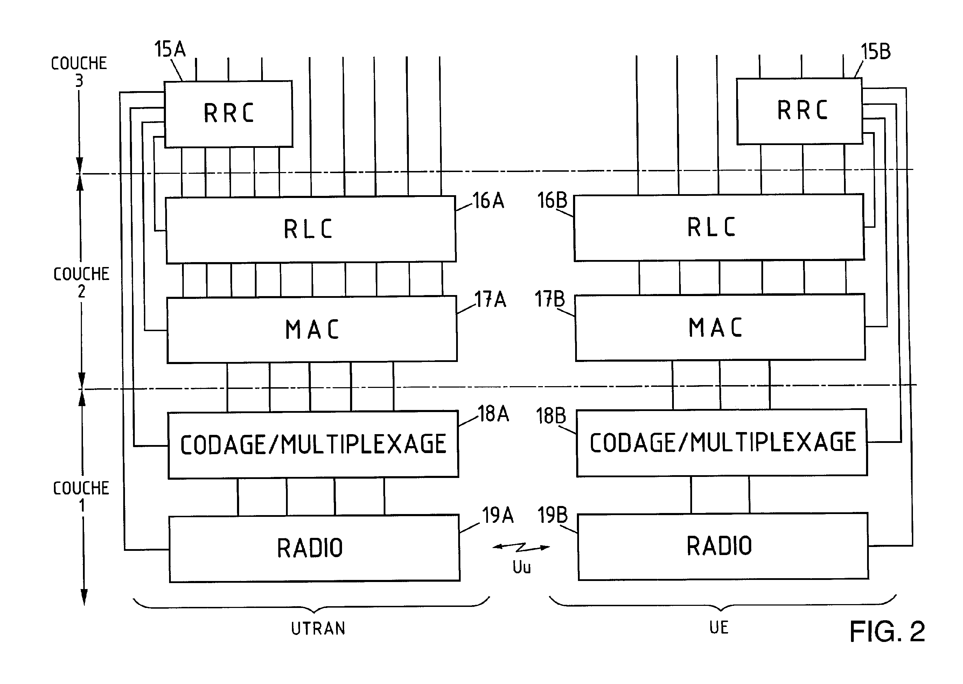

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, "Radio Link Control") et un étage 17A, 17B de contrôle d'accès au médium (MAC, "Medium Access Control"). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, "UTRAN Overall Description", version 4.2.0 publiée en septembre 2001 par le 3GPP). Les étages RRC, RLC et MAC se trouvent dans le RNC 12. La couche 1 se trouve par exemple dans le node B. Une partie de cette couche peut toutefois se trouver dans le RNC 12.

Les couches 1 et 2 sont chacune contrôlées par la sous-couche RRC, dont les caractéristiques sont décrites dans la spécification technique 3G TS 25:331, "RRC Protocol Specification", version 4.1.0 publiée en juin 2001 par le 3GPP. L'étage RRC 15A, 15B supervise l'interface radio. Il traite en outre des flux à transmettre à la station distante selon un "plan de contrôle", par opposition au "plan d'utilisateur" qui correspond au traitement des données d'utilisateur issues de la couche 3.

L'UMTS en mode FDD supporte une technique de macrodiversité, qui consiste à prévoir qu'un UE puisse simultanément communiquer avec des stations radio distinctes d'un ensemble actif ("active set") de façon telle que, dans le sens descendant, l'UE reçoive plusieurs fois la même information et que, dans le sens montant, le signal radio émis par l'UE soit capté par les stations radio pour former des estimations différentes ensuite combinées dans l'UTRAN. La macrodiversité procure un gain de réception qui améliore les performances du système grâce à la combinaison d'observations différentes d'une même information. Elle permet également de réaliser des transferts intercellulaires en douceur (SHO), lorsque l'UE se déplace.

En macrodiversité, l'aiguillage des canaux de transport pour l'émission multiple depuis l'UTRAN ou l'UE et la combinaison de ces canaux de transport en réception sont des opérations qui incombent à un module de sélection et combinaison appartenant à la couche 1. Ce module est à l'interface avec la sous-couche MAC, et il se trouve dans le RNC desservant l'UE. Si les stations radio impliquées dépendent de RNC différents communiquant à travers l'interface *lur,* l'un de ces RNC joue le rôle de SRNC et l'autre celui de DRNC.

Lorsque plusieurs RNC sont impliqués dans une communication avec un UE, il y a généralement un RNC de desserte appelé SRNC ("Serving RNC"), où se trouvent les modules relevant de la couche 2 (RLC et MAC), et au moins un RNC relais appelé DRNC ("Drift RNC") auquel est relié une station radio avec laquelle l'UE est en liaison radio. Des protocoles appropriés assurent les échanges entre ces RNC sur l'interface *lur*, par exemple ATM ("Asynchronous Transfer Mode") et AAL2 ("ATM Adaptation Layer No. 2").

Ces mêmes protocoles peuvent également être employés sur l'interface *lub* pour les échanges entre un node B et son RNC. Au dessus des couches ATM et AAL2, un protocole de trames (FP, "Frame Protocol") est utilisé dans le plan d'utilisateur pour faire communiquer le SRNC avec le ou les nodes B impliqués dans une communication avec un UE donné.

Ce protocole FP est décrit dans les spécifications techniques 3G TS 25.427, "UTRAN lub/lur Interface User Plane Protocol for DCH Data Streams", et 3G TS 25.435, "UTRAN lub Interface User Plane Protocols for Common Transport Channel Data Streams", versions 4.3.0, publiées en décembre 2001 par le 3GPP. Il fournit notamment des trames de signalisation permettant d'opérer la synchronisation des canaux de transport de la manière décrite dans la section 7 de la spécification technique 25.402, "Synchronisation in UTRAN Stage 2", version 4.3.0, publiée en décembre 2001 par le 3GPP.

Cette synchronisation des canaux de transport a pour objet de procurer une numérotation commune des trames de couche 2 entre l'UTRAN et l'UE, effectuée à l'aide d'un numéro de trame de connexion (CFN, "Connection Frame Number") de 8 bits, que la couche 2 gère pour chaque ensemble de blocs de transport (TBS, "Transport Block Set") échangé avec l'UE en l'incrémentant d'une unité toutes les 10 ms.

Ce CFN n'est pas transmis sur l'interface air, mais il est adjoint aux trames échangées sur l'interface *lub*. La couche physique le transpose sur une numérotation des trames tenue à jour pour chaque cellule, définie par un numéro de trame système SFN ("System Frame Number") codé sur 12 bits. Le node B incrémente ce SFN à chaque nouvelle trame radio de 10 ms et le diffuse sur les canaux communs de contrôle de la cellule.

Pour un TBS donné et une cellule donnée, le décalage entre le CFN et le SFN est déterminé avant l'établissement du lien radio entre le node B et l'UE concerné, en termes d'un décalage exprimé par un nombre entier de trames ("Frame Offset"). Au démarrage de l'émission radio pour le TBS, ce décalage est nul : le CFN est initialisé au SFN (modulo 256) de la première trame utilisée pour l'émission du TBS. Avant l'ajout d'un lien radio en macrodiversité, l'UE mesure le décalage entre le CFN courant et le SFN diffusé par la nouvelle cellule et en rend compte au SRNC. Celui-ci en déduit le paramètre "Frame Offset" pertinent pour la nouvelle cellule et en informe le node B pour qu'il tienne compte du décalage entre les compteurs CFN et SFN.

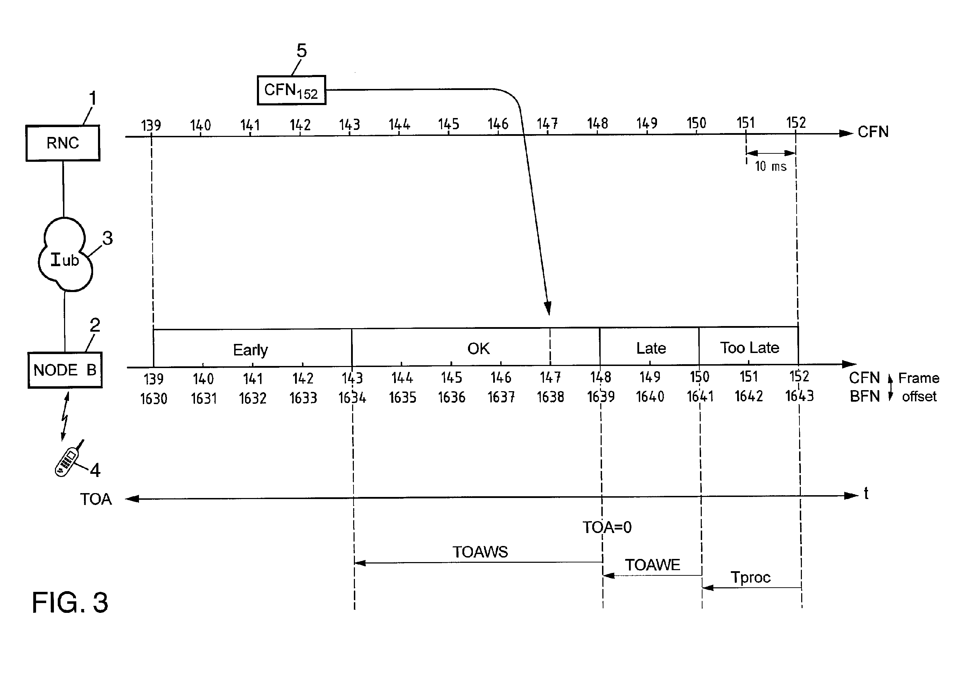

Dans le sens descendant, lorsqu'une trame de données est à transmettre à l'UE, le SRNC anticipe son émission par rapport au CFN correspondant pour tenir compte du temps d'acheminement jusqu'au node B et du temps de traitement requis par celui-ci, notamment dans l'étage de codage et de multiplexage 18A. La norme prévoit une fenêtre de réception pour chaque trame FP (DCH-FP PDU) que le SRNC adresse à un node B, définie en référence à un axe TOA ("Time Of Arrivai") dirigé en sens inverse du temps avec une origine au point de référence TOA = 0. Cette fenêtre est définie par les paramètres suivants:
- T_{proc} égal au temps minimal, dépendant de l'équipement, nécessaire au traitement d'une trame par le node B avant qu'il puisse commencer à l'émettre sur l'interface air;
- TOAWS ("Time Of Arrival Window Startpoint") déterminant la largeur de la fenêtre de réception. Une trame reçue avec un TOA compris entre 0 et TOAWS est considérée comme normalement reçue ("OK" sur la figure 3 qui montre la fenêtre de réception pour la trame de CFN 152). Une trame reçue avec un TOA plus grand que TOAWS est considérée comme reçue en avance ("Early" sur la figure 3);
- TOAWE ("Time Of Arrival Window End") déterminant la position de la fenêtre de réception, c'est-à-dire celle du point de référence TOA = 0 qui est antérieur de T_{proc} + TOAWE à l'instant correspondant au début de la période de trame numérotée CFN (compte tenu du Frame Offset). Lorsqu'il est plus grand que 0, ce paramètre TOAWE permet de distinguer les trames reçues tardivement mais qui peuvent encore être traitées par le node B (-TOAWE < TOA < 0, "Late" sur la figure 3) et les trames reçues trop tardivement et détruites par le node B (TOA < - TOAWE, "Too Late" sur la figure 3).

Lorsque le node B reçoit une trame de données en dehors de la fenêtre correspondante, il en rend compte au RNC dans une trame TAD ("Timing Adjusment") du protocole FP, qui comporte le numéro CFN de la trame de données en question ainsi que la valeur du TOA avec lequel elle a été reçue (voir sections 5.2 et 6.3.3.1 de la spécification TS 25.427 précitée). Ceci permet au RNC de corriger l'instant auquel il émet les trames suivantes vers le node B.

Dans les périodes où il n'y a pas de trames de données à émettre, le RNC envoie au node B des trames de signalisation "DL SYNC" contenant chacune le CFN par rapport auquel cette trame devrait être reçue. Le node B y répond immédiatement en retournant une trame "UL SYNC" indiquant ce CFN et la valeur de TOA correspondant à la réception de cette trame. Ce mécanisme permet d'éviter que la fenêtre dérive sans que le RNC en soit informé par des trames TAD (voir section 7.2 de la spécification TS 25.402 précitée et sections 5.3, 6.3.3.2 et 6.3.3.3 de la spécification TS 25.427 précitée).

En situation de macrodiversité, chaque trame FP de CFN donné n'est émise qu'une fois par le SRNC. Les différences de rapidité des liens *lub* ou *lur*/*lub* contraignent la détermination du bon instant d'émission par le SRNC. Pour les nodes B avec lesquels les liens *lub* ou *lur*/*lub* sont rapides, les valeurs élevées de TOA font que les tampons des nodes B peuvent manquer de capacité. Inversement, pour les nodes B avec lesquels les liens *lub* ou *lur*/*lub* sont lents, les valeurs faibles ou négatives de TOA risquent de provoquer des pertes de données. Chaque ajout ou suppression d'une cellule dans l'ensemble actif pour un TBS donné entraîne une modification de ces contraintes.

Par ailleurs, si le cadre de travail proposé par le 3GPP permet d'établir des bases pour définir la synchronisation des canaux de transport à travers l'interface *lub* dans le sens descendant ("downlink"), rien n'y est précisé pour le sens montant ("uplink"). Pourtant, les problèmes posés en downlink sont aussi présents dans ce dernier cas.

Dans le sens montant en effet, chaque node B transmet des trames de données à son SRNC de rattachement. Toutefois, aucune temporisation n'existe au niveau des nodes B pour retarder ou anticiper l'émission des trames montantes, si bien que celles-ci peuvent être transmises de façon espacée dans le temps. Au niveau du SRNC, une combinaison des trames reçues avec un numéro de CFN identique depuis les différents nodes B est effectuée régulièrement à l'expiration d'un timer ("TTI timer" ou "Transmission Time Interval timer"). Si certaines des trames montantes sont reçues par le SRNC après expiration de ce timer, elles seront perdues et non prises en compte dans la combinaison. A l'inverse, des trames reçues trop tôt par le SRNC, c'est-à-dire au-delà de la capacité maximum des tampons du SRNC, ne pourront pas être conservées en mémoire pour être prise en compte dans la combinaison des trames.

Un but de la présente invention est de proposer une méthode permettant à une unité de contrôle telle qu'un RNC de définir les instants optimaux pour effectuer des opérations requises pour des trames échangées avec une ou plusieurs stations radio.

Un autre but est de parvenir à un bon compromis entre un taux de perte minimum des trames transmises et un délai d'attente minimum pour la transmission de ces trames.

Un autre but encore est de proposer un mécanisme de remontée d'informations et d'analyse de ces informations à une unité de contrôle telle qu'un RNC pour améliorer le séquencement des opérations à effectuer sur les trames que ce soit dans le sens descendant ou dans le sens montant.

L'invention propose ainsi un procédé de contrôle d'émission de trames depuis une unité de contrôle vers au moins une station radio, dans lequel chaque station radio a une fenêtre de réception respective associée à chaque trame, positionnée dans le temps en fonction d'un repère temporel inséré dans ladite trame par l'unité de contrôle. Les trames incluent des trames de données, dans lesquelles le repère temporel est inséré par l'unité de contrôle pour la synchronisation avec un terminal radio vers lequel chaque station radio émet des données desdites trames de données, et des trames de signalisation. Chaque station radio est agencée pour signaler à l'unité de contrôle une trame de données reçue en dehors de la fenêtre de réception associée, et pour répondre à une trame de signalisation en retournant à l'unité de contrôle un paramètre de synchronisation représentatif d'un instant de réception de ladite trame de signalisation par rapport à la fenêtre de réception associée. Le procédé comprend les étapes suivantes exécutées par l'unité de contrôle dans une période d'émission de trames de données successives:
- émettre des trames de signalisation vers chaque station radio;
- traiter les paramètres de synchronisation retournés; et
- asservir les instants d'émission des trames de données successives en fonction des paramètres traités.

L'émission des trames de signalisation peut être périodique, de manière à obtenir régulièrement des informations de synchronisation au RNC. Cette régularité peut d'ailleurs être variable. Elle peut notamment dépendre de la quantité d'informations déjà disponibles au RNC, par exemple suite à un grand nombre de remontées de trames TAD.

Le traitement des paramètres de synchronisation retournés peut comprendre une comparaison à des instants prédéterminés. La comparaison peut être faite sur des estimateurs basés sur les paramètres de synchronisation retournés comme des moyennes glissantes des instants de réception des dernières trames reçues au RNC.

En fonction du résultat de cette comparaison, une valeur d'ajustement peut être calculée par l'unité de contrôle. Elle servira à augmenter ou à diminuer les instants d'émission du RNC pour les trames de données suivantes. Elle sera de préférence calculée pour que les trames suivantes soient reçues, avec une forte probabilité, dans la fenêtre de réception associée, sans grand risque de perte, et cela pour chaque station radio.

La valeur d'ajustement peut notamment être choisie pour viser un instant précis dans la fenêtre de réception. Par exemple, cet instant peut être situé en fin de fenêtre de réception pour la station radio ayant le lien le plus lent avec l'unité de contrôle.

Selon un autre aspect, l'invention propose un procédé de contrôle de réception et de combinaison de trames à une unité de contrôle, les trames étant émises depuis au moins une station radio, dans lequel l'unité de contrôle a une fenêtre de réception associée à chaque trame, positionnée dans le temps en fonction d'un repère temporel inséré dans ladite trame par chaque station radio. Les trames incluent des trames de données, dans lesquelles le repère temporel est inséré par chaque station radio pour la synchronisation avec un terminal radio émettant des données desdites trames de données. L'unité de contrôle est agencée pour détecter une trame de données reçue en dehors de la fenêtre de réception associée, et pour déterminer un instant de réception d'une trame de données par rapport à la fenêtre de réception associée. L'unité de contrôle est agencée pour effectuer une combinaison des trames de données reçues de certaines au moins des stations radio et insérant un même repère temporel, à une date d'expiration d'un timer respectif, positionnée dans le temps en fonction de la fenêtre de réception associée. Le procédé comprend les étapes suivantes exécutées par l'unité de contrôle dans une période de réception de trames de données successives :
- traiter les instants de réception déterminés ;
- asservir la date d'expiration du timer en fonction des instants de réception traités.

L'unité de contrôle est capable d'adapter ses instants de réception des trames venant des différentes stations radio, de manière à ce que leur taux de perte soit diminué. Elle peut en effet modifier la valeur du timer susmentionné et, à l'expiration de celui-ci, combiner l'ensemble des données reçues depuis les différentes stations radio. Tant que le timer n'a pas expiré, elle peut recevoir des trames numérotées afin de les prendre en compte ensuite dans sa combinaison de trames de même numéro.

Une valeur d'ajustement de la date d'expiration du timer peut être choisie pour viser un instant précis, à l'intérieur de la fenêtre de réception adéquate, pour la réception des trames par l'unité de contrôle. Par exemple, cet instant peut être situé en fin de fenêtre de réception pour les trames émises par la station radio ayant le lien le plus lent avec l'unité de contrôle. La valeur d'ajustement peut aussi de préférence être évaluée sur la base d'une estimation, par exemple une moyenne, de plusieurs indications d'instant de réception.

En outre, l'invention propose des unités de contrôle pour mettre en oeuvre les procédés présentés ci-dessus.

D'autres particularités et avantages de la présente invention apparaîtront dans la description ci-après d'exemples de réalisation non limitatifs, en référence aux dessins annexés, dans lesquels :
- la figure 1, déjà commentée, est un schéma d'architecture d'un système UMTS ;
- la figure 2 , déjà commentée, est un schéma représentant les couches protocolaires communes à l'UTRAN et l'UE ;
- la figure 3, déjà commentée, est une représentation schématique des fenêtres entrant en jeu dans la synchronisation de l'interface lub, telle que normalisée dans le système UMTS par le 3GPP ;
- la figure 4 est une représentation schématique d'un mécanisme de contrôle d'émission de trames descendantes selon l'invention, dans son application à l'interface lub ;
- la figure 5 est un diagramme montrant les étapes de calcul d'une valeur d'ajustement dans un exemple de réalisation en mode descendant ;
- la figure 6 est une représentation schématique d'un mécanisme de contrôle de réception de trames montantes selon l'invention, dans son application à l'interface lub ;
- la figure 7 est un diagramme montrant les étapes de calcul d'une valeur d'ajustement dans un exemple de réalisation en mode montant.

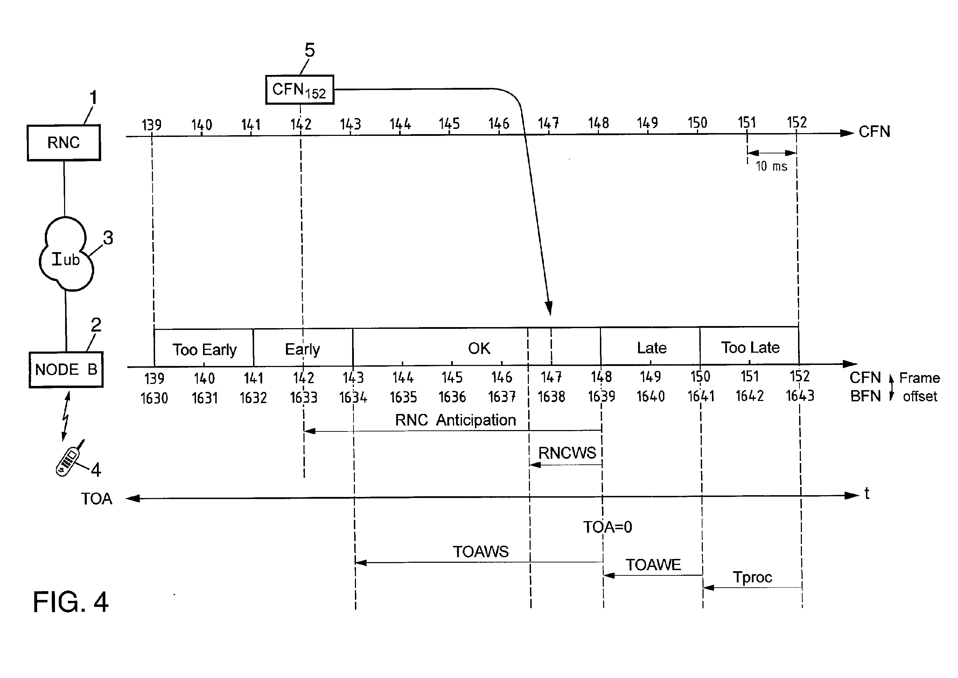

On se place à nouveau dans le cas non limitatif de l'interface lub de l'UMTS. La figure 4 présente, dans une représentation analogue à celle de la figure 3, les principaux éléments entrant en jeu dans la synchronisation de l'interface lub selon l'invention. En particulier, les différentes plages de réception normalisées par le 3GPP sont utilisées. Selon l'invention, la plage "Early" prévue parle 3GPP a été divisée en deux parties "Too early" et "Early", comme c'était le cas pour les fenêtres "Late" et "Too late" normalisées. La séparation entre ces deux fenêtres (CFN=141 sur la figure 4) est relative à la taille maximale des tampons des nodes B 2. Cela signifie qu'une trame 5 arrivant à un node B 2 entre les plages "Early" et "Too late", c'est-à-dire entre les CFN=141 et CFN=152, peut normalement être stockée dans un tampon du node B 2. Si la trame arrive trop tôt, typiquement dans la fenêtre "Too early", la capacité de stockage du node B 2 est insuffisante pour pouvoir la mémoriser durablement jusqu'à sa retransmission. Ainsi, une telle trame ne pourra être retransmise à un terminal 4. II faut néanmoins noter que les tailles de fenêtres retenues dans l'exemple illustré par la figure 4 sont de simples exemples non limitatifs. En particulier, les fenêtres utilisées peuvent avoir des tailles qui ne sont pas des multiples de 10 ms.

Comme cela a été décrit précédemment, des trames montantes contenant des paramètres de synchronisation représentatifs d'un instant de réception de trames descendantes reçues, sont envoyées au RNC 1, soit à sa demande (trames de signalisation "UL SYNC" en réponse à "DL SYNC"), soit après réception d'une trame de données par un node B 2 à l'extérieur de la fenêtre de réception marquée "OK". Cette remontée d'information donne donc des éléments pertinents que le RNC peut prendre en compte comme base de décision pour asservir ses instants d'émission pour de futures trames. Selon l'invention, cette remontée d'information peut être systématisée, pour que le RNC 1 dispose en permanence d'informations à jour sur les instants de réception, y compris lors des périodes de silence. A cet effet, le RNC 1 peut envoyer des trames de signalisation "DL SYNC" successives, par exemple de façon périodique, à chaque node B 2. Les nodes B 2 répondent à chaque trame de contrôle "DL SYNC" par une trame de signalisation "UL SYNC" contenant un paramètre de synchronisation représentatif d'un instant de réception (TOA) de la trame précédente "DL SYNC", avec le numéro CFN qu'elle insérait. Ainsi, même en l'absence de toute réception de trame TAD de la part du RNC 1, celui-ci dispose d'informations mises à jour régulièrement sur les instants de réception des trames qu'il transmet aux nodes B 2 et donc sur les durées de transmission de ces trames. De façon avantageuse, la période d'envoi par le RNC 1 de trames "DL SYNC" dépend de la quantité d'informations déjà disponibles sur les temps de transmission entre le RNC 1 et chaque node B 2. Par exemple, si une interface lub donne lieu de la part d'un node B 2, sur une période d'observation correspondant par exemple à une période d'émission de trames de données successives, à un grand nombre de remontées sous la forme de trames TAD, la période d'envoi des trames "DL SYNC" peut être réduite par le RNC 1. A l'inverse, si peu de trames TAD sont envoyées par un node B 2 au RNC 1, ce dernier peut décider d'augmenter la période d'envoi des trames "DL SYNC" à destination du node B concerné. Par ailleurs, la période d'envoi des trames "DL SYNC" peut varier au cours du temps en fonction de conditions ou d'événements particuliers, comme la présence ou l'absence de macrodiversité, l'ajout ou la suppression d'un Node B dans l'ensemble actif en communication avec le terminal 4, ou encore le taux de charge sur la couche transport de l'interface lub.

On peut noter que, l'émission d'une trame "DL SYNC" par le RNC 1 vers un node B 2 se traduisant normalement par une réponse du node B sous la forme d'une trame. "UL SYNC", l'absence de réponse de la part d'un node B 2 peut permettre de diagnostiquer une défaillance sur l'interface lub, au-delà de la simple panne du lien physique (défaillance au niveau transport AAL2 notamment).

A la suite de la transmission par un node B 2 d'un paramètre de synchronisation représentatif d'un instant de réception d'une trame "UL SYNC" en réponse à une trame "DL SYNC", le RNC 1 stocke la valeur reçue dans une table. Le paramètre en question peut être par exemple une valeur de TOA telle que décrite plus haut. Dans la table de stockage du RNC 1, cette valeur est associée au numéro CFN inclus dans la trame "DL SYNC" correspondante et au node B considéré. Ainsi, lorsque plusieurs nodes B 2 sont en communication avec le terminal 4 en mode de macrodiversité, le RNC 1 stocke dans sa table l'ensemble des valeurs TOA reçues pour un CFN donné et pour chaque node B 2.

A un instant donné, le RNC 1 envoie les trames de données à destination des nodes B 2 avec une certaine avance en temps ou "anticipation" par rapport à la référence de temps TOA=0. Ainsi, l'anticipation utilisée par le RNC 1 pour la trame 5 de la figure 4 est de 60 ms, correspondant aux six intervalles de temps de 10 ms entre le temps de transmission de la trame par le RNC (CFN=142) et la référence TOA=0 (CFN=148 pour la trame considérée). On se place ici dans l'hypothèse où la périodicité des trames sur l'interface lub est de 10 ms (elle pourrait également avoir une valeur supérieure, multiple de 10 ms). Sans ajustement de l'anticipation, le RNC 1 enverra la trame suivante, incluant le numéro CFN=153, aux nodes B 2 avec la même avance en temps que pour la trame 5 (60 ms). Pour prendre en compte les variations de temps de transmission sur les interfaces lub 3 et les éventuels ajouts et/ou suppressions de nodes B 2 dans l'ensemble actif des nodes B en communication avec le terminal 4, il est cependant préférable d'ajuster l'anticipation. Cet asservissement des instants d'émission pour les trames suivantes peut se faire par comparaison des valeurs stockées dans la table du RNC 1, avec des valeurs de référence prédéterminées.

Les valeurs de référence prises en compte comprennent les valeurs des paramètres normalisés par le 3GPP, à savoir les TOAWS et TOAWE présentés en première partie. Par ailleurs, un nouveau paramètre est introduit dans l'invention : le RNCWS ("RNC Window Size"). Il correspond au point de réception à viser par le RNC 1 à l'intérieur de la fenêtre de réception "OK", pour un node B 2. Le RNCWS peut avoir une valeur fixe ou variable. Il peut par exemple dépendre du type de service demandé par l'utilisateur du terminal 4. Un RNCWS faible voire négatif pourra ainsi être utilisé pour un service temps réel, c'est-à-dire nécessitant une transmission très rapide au détriment d'un taux de perte potentiellement élevé. Le RNCWS peut aussi prendre en compte la taille des tampons des nodes B 2, de manière à ce que sa valeur soit limitée pour des files d'attente très réduites. Le RNC 1 pourra stocker une table donnant une correspondance entre des valeurs de RNCWS et différents critères (service demandé, taille des tampons...), de manière à initialiser le RNCWS à une valeur adéquate lors de l'établissement du lien ou du service par exemple.

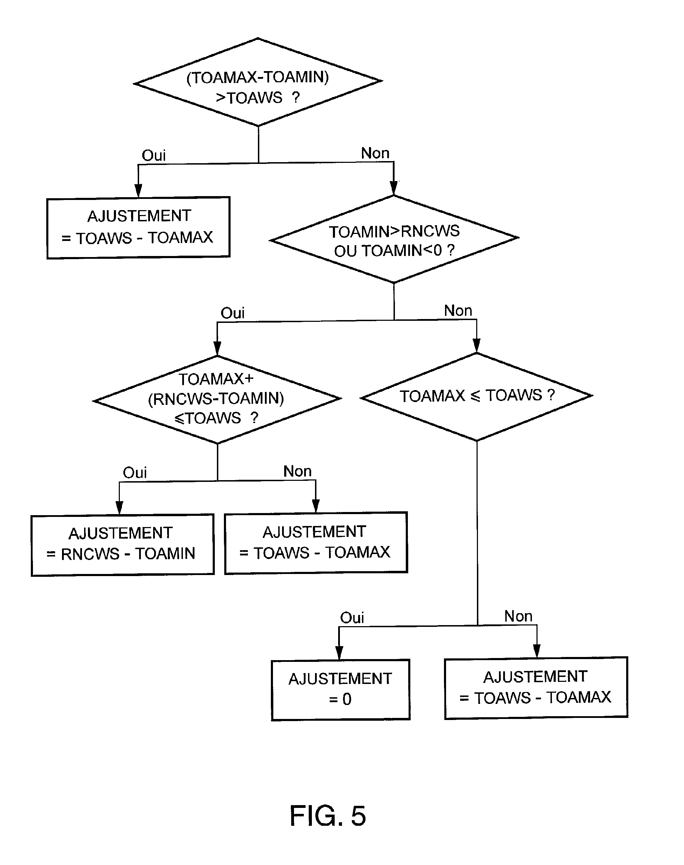

La figure 5 présente un diagramme proposant un calcul de valeur d'ajustement selon un mode de réalisation avantageux de l'invention. On se base sur une estimation des valeurs stockées par le RNC 1. En effet, comme on l'a vu plus haut, le RNC stocke des valeurs successives (c'est-à-dire pour des CFN successifs) de TOA pour chaque node B 2 en communication avec le terminal 4. Il réalise alors, pour chaque node B, une estimation d'instants de réception, qui est une fonction d'au moins une valeur de TOA stockée. Par exemple, l'estimation peut consister en une moyenne glissante des N dernières valeurs de TOA stockées, avec N entier naturel non nul. Il obtient ainsi une moyenne des TOA pour chaque node B 2, mise à jour par exemple à chaque nouvelle réception, par le RNC, d'un instant de réception transmis par ledit node B. A un instant donné, typiquement à la réception d'un nouvel ensemble de TOA depuis les différents nodes B 2, le RNC 1 sélectionne les valeurs minimale TOAMIN et maximale TOAMAX parmi les estimations obtenues. TOAMIN correspond à l'interface lub la plus lente (c'est-à-dire ayant le temps de transmission le plus long) et TOAMAX à l'interface lub la plus rapide. Dans le cas où le terminal 4 ne serait en communication qu'avec un seul node B 2, les valeurs TOAMAX et TOAMIN seraient égales et la succession d'étapes de calcul ci-dessous pourrait encore s'appliquer. Dans un mode de réalisation, la valeur de RNCWS peut être choisie pour être faible par rapport à celle de TOAWS, de manière à ce qu'une trame reçue à l'instant correspondant à RNCWS le soit en fin de fenêtre de réception "OK".

Dans l'exemple considéré sur la figure 5, on commence par comparer la différence maximum de "rapidité" des interfaces lub TOAMAX-TOAMIN avec la valeur de TOAWS. Cette comparaison permet de savoir si au moins une des deux interfaces lub considérées présente une réception des trames à l'extérieur de la fenêtre de réception "OK". Si c'est le cas, on fixe la valeur d'ajustement à la différence TOAWS-TOAMAX, ce qui revient à ramener TOAMAX à la valeur de TOAWS, ou encore à imposer une réception de trame au début de la fenêtre de réception "OK" pour le lien le plus rapide. De cette façon, des interfaces lub 3 plus lentes feront l'objet d'une réception des trames à l'intérieur de la fenêtre de réception "OK", tandis que d'autres, comme l'interface la plus lente, aboutiront à des réceptions tardives des trames et peut-être à des pertes de trames dans le cas de réception dans la plage "Too late".

Si la différence TOAMAX-TOAMIN est inférieure ou égale à TOAWS, on s'intéresse à la valeur de TOAMIN. Si celle-ci est supérieure à RNCWS ou négative et que TOAMAX+(RNCWS-TOAMIN) est inférieur ou égal à TOAWS, cela signifie que TOAMAX serait inférieur à TOAWS et donc dans la fenêtre de réception "OK" si on ramenait TOAMIN à la valeur de RNCWS. On fixe dans ce cas la valeur d'ajustement de l'anticipation RNC à RNCWS-TOAMIN de manière à ramener, pour l'interface lub 3 la plus lente, la réception des trames à l'instant correspondant au RNCWS (CFN=147 sur la figure 4, pour la trame 5 numérotée CFN=152). Ainsi, toutes les interfaces lub 3 donneront lieu à des réceptions de trames dans la fenêtre de réception souhaitée (plage "OK"). Si TOAMIN est supérieur à RNCWS ou négatif, mais TOAMAX+(RNCWS-TOAMIN) est supérieur à TOAWS, on fixe l'ajustement à TOAWS-TOAMAX, c'est-à-dire qu'on ramène la réception de l'interface lub la plus rapide en début de fenêtre de réception "OK". Ainsi, toutes les interfaces lub 3 donneront lieu à des réceptions de trames dans la fenêtre adéquate "OK", même si l'interface la plus lente se rapproche d'une situation de perte de trames, puisque en fin de fenêtre "OK" (entre RNCWS et TOA=0).

Si la différence TOAMAX-TOAMIN est inférieure ou égale à TOAWS et TOAMIN est inférieur ou égal à RNCWS tout en étant positif (c'est-à-dire en fin de fenêtre "OK"), on s'intéresse à la valeur de TOAMAX. Si cette dernière est inférieure ou égale à TOAWS, c'est-à-dire dans la fenêtre de réception "OK", toutes les interfaces lub y compris la plus lente et la plus rapide, sur la base des moyennes calculées, donnent lieu à des réceptions de trames dans la plage réservée à cet effet (fenêtre "OK"). Dans ce cas, aucun ajustement n'est nécessaire. Sinon, il convient de faire en sorte que TOAMAX entre dans la fenêtre "OK", puisque cela ne fera pas sortir TOAMIN de cette fenêtre. C'est pourquoi, dans ce cas, on choisit un ajustement de TOAWS-TOAMAX, qui ramène TOAMAX au début de la fenêtre "OK".

Pour la transmission de la trame suivante (trame insérant le CFN=153), le RNC 1 réévaluera l'instant de transmission prévu (par exemple, CFN=143, soit une anticipation RNC de 10*10 = 100 ms) en la translatant selon la valeur d'ajustement calculée par la méthode ci-dessus. Ainsi, si la valeur d'ajustement obtenue est de -10 ms, la nouvelle anticipation RNC sera de 100-10 = 90 ms et la transmission correspondante sera réalisée par le RNC à l'instant correspondant à CFN=144, dans l'exemple de la figure 4.

La valeur d'ajustement calculée aura dans de nombreux cas une valeur inférieure à 10 ms, en valeur absolue, si bien que l'émission des trames se fera généralement entre deux numéros de CFN au niveau du RNC 1. Toutefois, il peut arriver que la valeur d'ajustement soit de 10 ms, voire plus. Dans un tel cas, l'anticipation RNC est augmentée de façon à ce que la transmission de la trame suivante soit faite à un instant correspondant à un CFN plus faible que prévu, soit CFN=142 dans notre exemple.

Il faut par ailleurs noter que les valeurs de TOA retournées par les nodes B 2 et stockées par le RNC 1 doivent être considérées en fonction des différents ajustements réalisés, pour pouvoir être comparées. En effet, une anticipation de la transmission d'une trame par le RNC 1, par exemple, modifie d'autant les instants de réception au niveau de chaque node B 2. C'est pourquoi il convient de mettre à jour, dans les tables de stockage du RNC, les derniers instants de réception remontés, à chaque ajustement de l'anticipation RNC, en leur ajoutant la valeur d'ajustement calculée. Les valeurs TOAMIN et TOAMAX sont alors évaluées à partir de données homogènes, avec une référence de temps commune.

Si une valeur d'ajustement vient d'être évaluée par le RNC 1 sur la base des N derniers instants de réception remontés par chaque node B 2 de l'ensemble actif, et si une nouvelle remontée d'instant de réception a lieu à la suite de cette évaluation, en réponse à la réception d'une trame de signalisation transmise par le RNC 1 avant le calcul d'ajustement, ce nouvel instant remonté aura été obtenu en référence à l'ancien système de temps (valeur de TOA non translatée selon la nouvelle valeur d'ajustement). C'est par exemple le cas pour une trame de contrôle envoyée par un node B 2 au RNC 1 avec une valeur de CFN antérieure à celle correspondant au calcul de l'ajustement en cours. Pour éviter toute confusion et avoir des données temporelles homogènes entre elles, le RNC 1 peut choisir d'ignorer la nouvelle indication d'instant de réception remontée par le node B. Celle-ci ne sera alors pas stockée dans la table du RNC et ne sera donc pas prise en compte dans les estimations d'instants de réception pour le node B concerné. Dans une alternative avantageuse, le RNC 1 compare le CFN envoyé par le node B 2 dans la trame de contrôle avec celui pour lequel le calcul de la valeur d'ajustement est en cours et, si la trame de contrôle résulte de la réception d'une trame antérieure au calcul de l'ajustement, le RNC stocke tout de même l'instant de réception retourné mais en le translatant de la valeur d'ajustement nouvellement calculée. L'information remontée par le node B est ainsi mise en conformité avec le nouveau système de référence, en liaison avec l'anticipation RNC. Cette même mise à jour avant stockage de l'instant de réception peut s'appliquer à tout node B de l'ensemble actif considéré.

Lors des étapes de calcul de l'ajustement ci-dessus, on s'est placé en cours de communication entre les différents nodes B 2 et le terminal 4. Lorsque le lien radio est établi entre le RNC 1 et les nodes B 2 de l'ensemble actif, c'est-à-dire avant le démarrage de la communication avec le terminal 4, aucune valeur de paramètre n'est encore disponible. A cet effet, on peut initialiser les paramètres de la façon suivante : on affecte la valeur 0 au premier CFN considéré et la valeur du premier TOA reçu au RNC aux paramètres TOAMAX et TOAMIN. Ultérieurement, lorsqu'une trame montante est reçue au RNC 1, ce dernier contrôle la valeur de CFN qu'elle contient et vérifie qu'elle correspond bien à une valeur de CFN pour laquelle une trame descendante a été transmise et pour laquelle le RNC 1 attend un paramètre de synchronisation représentatif d'un instant de réception. Si tel est le cas, la valeur de TOA remontée dans la trame montante est stockée par le RNC 1. Sinon, la trame est ignorée.

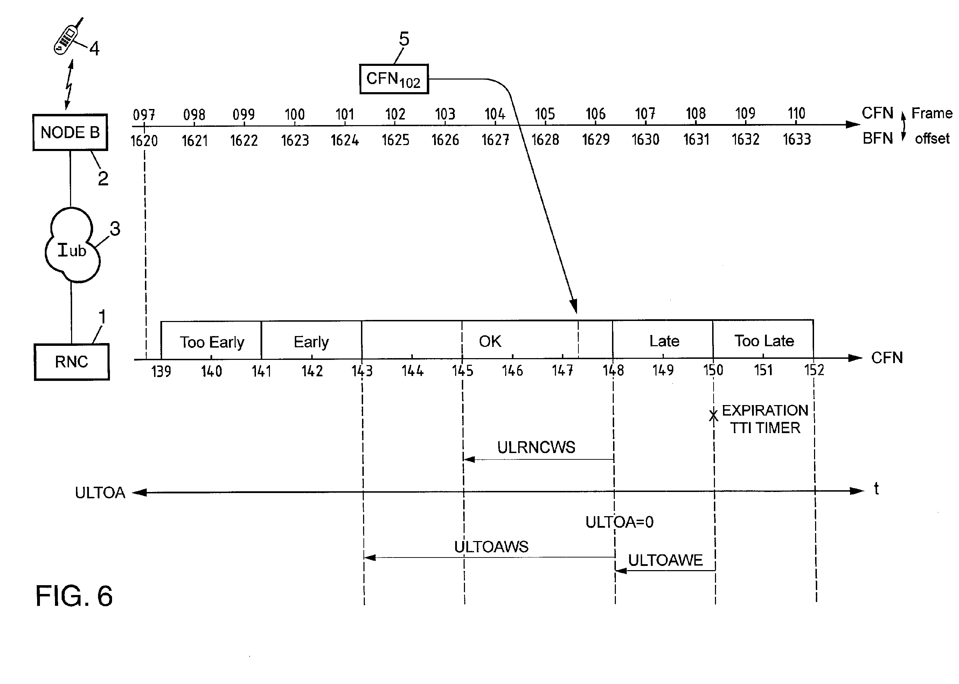

La figure 6 présente un second aspect de l'invention qui s'applique à une transmission uplink, c'est-à-dire à une transmission de trames montantes, depuis des nodes B 2 d'un ensemble actif en communication avec un terminal 4, à destination d'un RNC 1. Comme exposé précédemment dans le cas downlink (mode descendant), chaque node B 2 maintient une connaissance de la différence de l'axe temporel qu'il gère (BFN) avec celui-ci géré par le RNC 1 (CFN) et compense cette différence (Frame Offset) pour remonter des trames au RNC insérant une information de CFN correspondant à une date d'émission des trames. Le RNC, quant à lui, se contente donc de lire les valeurs de CFN reçues dans les trames de données montantes depuis les différents nodes B 2 et de combiner entre elles les trames insérant un même CFN. Cette combinaison prend effet à l'expiration du TTI timer, introduit plus haut. Le TTI timer est déclenché après chaque combinaison de trames montantes et s'achève à une date d'expiration pouvant varier légèrement d'une trame à l'autre (instant correspondant à CFN=150, vu du RNC, pour la trame 5 sur la figure 6).

Comme le montre la figure 6, l'invention définit en uplink les mêmes types de fenêtres de réception qu'en downlink, à la différence que celles-ci sont appliquées au niveau du RNC 1. La référence des temps (ULTOA=0) varie à chaque expiration du TTI timer. Et comme précédemment, des valeurs ULTOAWS, de taille de fenêtre de réception "OK" au RNC 1, et ULTOAWE, de taille de fenêtre "Late" suivant la plage "OK" sont définies. Si une trame 5 insérant le CFN=102 est émise par un node B 2, et reçue par le RNC 1 dans la plage de temps "Too early" telle que représentée sur la figure 6 (CFN 139 à 141), elle ne sera pas prise en compte par le RNC 1 car ce dernier ne dispose pas de tampons de capacité suffisante pour la mémoriser jusqu'à la combinaison des trames de CFN=102, c'est-à-dire à l'expiration du TTI timer, qui intervient à la fin de la fenêtre "Late" (CFN=150). Inversement, si la trame 5 est reçue par le RNC 1 après le CFN=150, c'est-à-dire dans une plage de réception nommée "Too late", la combinaison des trames de CFN=102 a déjà eu lieu et la trame 5 est donc perdue. Le RNC 1 peut par ailleurs détecter si une trame 5 est reçue en dehors de la fenêtre de réception "OK", dans l'une des plages de temps "Early" (CFN 141 à 143 sur la figure 6) ou "Late" (CFN 148 à 150 sur la figure 6). L'invention introduit également un paramètre ULRNCWS (UpLink RNCWS) dont la valeur est inférieure à ULTOAWS et qui constitue un instant de réception au niveau du RNC 1 bien adapté à l'interface lub 3 en limitant le taux de perte de trames, notamment dans le cas où des nodes B sont ajoutés ou retirés de l'ensemble actif en communication avec le terminal 4. Le ULRNCWS peut être choisi au démarrage de la communication, par exemple à partir d'un table prédéfinie et stockée dans le RNC 1 et qui prend en compte différents critères comme le service demandé.

Contrairement au RNC 1 dans le cas downlink exposé précédemment, les nodes B 2 ne contrôlent pas leur instant d'émission mais transmettent des trames de données montantes, insérant un repère temporel CFN, à destination du RNC dès que celles-ci sont disponibles. C'est donc au RNC de modifier ses instants de combinaison des trames reçues pour limiter le taux de perte de trames. Pour cela, il modifie les dates d'expiration du TTI timer prévues pour les prochaines combinaisons de trames, de manière à ce qu'un maximum de trames reçues depuis les nodes B 2 le soient avant l'expiration du timer, de préférence dans la fenêtre de réception "OK" et si possible à des instants proches du ULRNCWS, du moins pour les liens lub 3 les plus lents, c'est-à-dire avec les temps de transmission les plus élevés. Cet asservissement de la date d'expiration du TTI timer correspond donc à un décalage de cette date par rapport à l'échelle CFN. Elle s'accompagne d'une translation des fenêtres de réception dans le temps pour les prochaines périodes de réception de trames de données montantes.

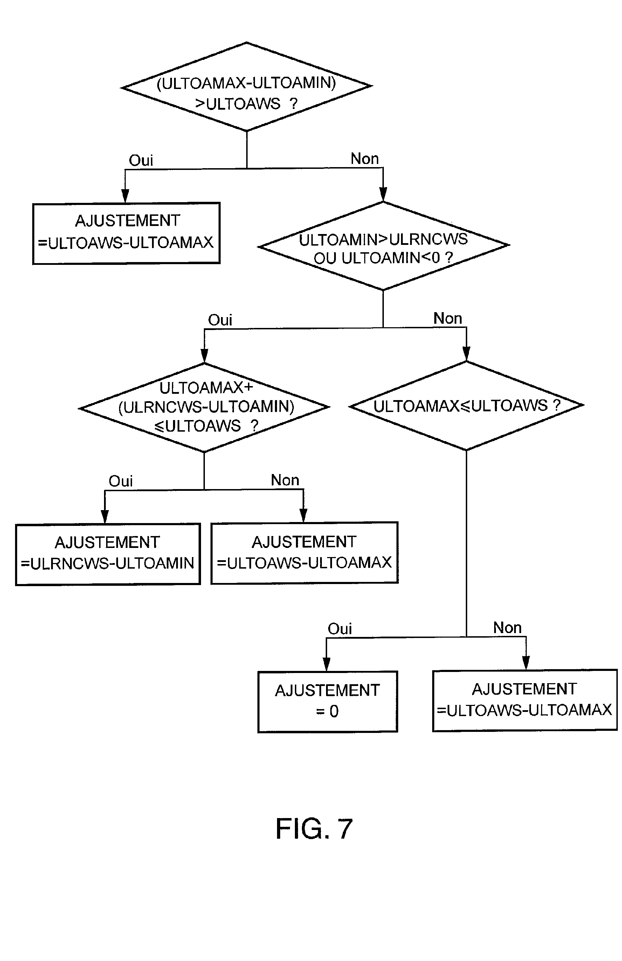

Pour effectuer l'asservissement, un processus du même type que celui décrit en downlink peut être réalisé. Des instants de réception sont établis par le RNC 1 lors de la réception d'une trame de données montante avec un numéro de CFN donné (CFN=102 par exemple pour la trame 5). Le RNC stocke les valeurs correspondantes (ULTOA) pour chaque node B 2 de l'ensemble actif en communication avec le terminal 4. Des estimations sont alors effectuées sur la base des valeurs stockées. Par exemple, le RNC calcule, pour chaque node B, une moyenne glissante sur les N dernières valeurs consécutives de ULTOA correspondant à des trames de même CFN, N étant un entier naturel non nul. A chaque instant, le RNC peut déterminer une valeur maximale ULTOAMAX et une valeur minimale ULTOAMIN, pouvant être égales lorsqu'une seul node B entre en jeu. La figure 7 présente un exemple de processus pour calculer une valeur d'ajustement en fonction des valeurs ULTOAMAX et ULTOAMIN déterminées ainsi que de leur comparaison avec les paramètres ULTOAWS et ULRNCWS introduits ci-dessus. On peut résumer les différentes étapes du processus comme suit :
- si ULTOAMAX-ULTOAMIN est supérieur à ULTOAWS, la valeur d'ajustement est fixée à ULTOAWS-ULTOAMAX ;
- si ULTOAMAX-ULTOAMIN est inférieur ou égal à ULTOAWS,
   o si ULTOAMIN est supérieur à ULRNCWS ou si ULTOAMIN est négatif,
      ■ si ULTOAMAX+(ULRNCWS-ULTOAMIN) est inférieur ou égal à ULTOAWS, la valeur d'ajustement est fixée à ULRNCWS-ULTOAMIN,
      ■ si ULTOAMAX+(ULRNCWS-ULTOAMIN) est supérieur à ULTOAWS, la valeur d'ajustement est fixée à ULTOAWS-ULTOAMAX ;
   o si ULTOAMIN est positif ou nul et inférieur ou égal à ULRNCWS,
      ■ si ULTOAMAX est inférieur ou égal à ULTOAWS, la valeur d'ajustement est nulle,
      ■ si ULTOAMAX est supérieur à ULTOAWS, la valeur d'ajustement est fixée à ULTOAWS-ULTOAMAX.

La valeur d'ajustement obtenue est alors ajoutée, après combinaison des trames, à celle du TTI timer afin de modifier la date d'expiration de ce dernier en vue de la prochaine période de réception de trames. Cet asservissement de la date d'expiration du TTI timer permet d'anticiper ou, au contraire, de retarder les instants de réception au RNC 1, pour la période de réception suivante, afin que le RNC soit en mesure de recevoir un maximum de trames avant l'expiration du TTI timer, sans trop allonger le délai de combinaison des trames de même CFN. Le RNC 1 translate ses fenêtres de réception en conséquence, de manière à ce qu'un maximum de trames soient reçues de préférence dans la fenêtre de réception "OK" lors des périodes suivantes de réception de trames montantes.

Comme en downlink, une mise à jour des valeurs d'instants de réception de trames montantes stockées au RNC 1 doit être effectuée pour éviter une oscillation du système. Elle consiste en une translation de ces valeurs selon la valeur d'ajustement, après ajustement de la date d'expiration du TTI timer pour prendre en compte ce changement.

## Revendications

1. Procédé de contrôle d'émission de trames depuis une unité de contrôle (1) vers au moins une station radio (2),
dans lequel chaque station radio a une fenêtre de réception respective associée à chaque trame, positionnée dans le temps en fonction d'un repère temporel inséré dans ladite trame par l'unité de contrôle,
dans lequel les trames incluent des trames de données (5), dans lesquelles le repère temporel est inséré par l'unité de contrôle pour la synchronisation avec un terminal radio (4) vers lequel chaque station radio émet des données desdites trames de données, et des trames de signalisation,
et dans lequel chaque station radio est agencée pour signaler à l'unité de contrôle une trame de données reçue en dehors de la fenêtre de réception associée, et pour répondre à une trame de signalisation en retournant à l'unité de contrôle un paramètre de synchronisation représentatif d'un instant de réception de ladite trame de signalisation par rapport à la fenêtre de réception associée,
le procédé comprenant les étapes suivantes exécutées par l'unité de contrôle dans une période d'émission de trames de données successives :
- émettre des trames de signalisation vers chaque station radio simultanément ;
- traiter les paramètres de synchronisation retournés ; et
- asservir les instants d'émission des trames de données successives en fonction des paramètres traités.

2. Procédé selon la revendication 1, dans lequel l'émission des trames de signalisation vers chaque station radio (2) est périodique.

3. Procédé selon la revendication 2, dans lequel l'émission des trames de signalisation vers chaque station radio (2) a une périodicité variable dans le temps.

4. Procédé selon la revendication 1, dans lequel les trames de signalisation sont émises vers chaque station radio (2) dans une proportion dépendant d'un nombre de trames retournées à l'unité de contrôle par certaines au moins des stations radio pour signaler une trame de données reçue en dehors de la fenêtre de réception associée sur une période d'émission de trames de données successives.

5. Procédé selon l'une quelconque des revendications précédentes, dans lequel on détermine une défaillance d'un lien de transport entre l'unité de contrôle (1) et une station radio (2), lorsque ladite station radio ne retourne pas de paramètre de synchronisation représentatif d'un instant de réception à l'unité de contrôle en réponse à des trames de signalisation.

6. Procédé selon l'une quelconque des revendications précédentes, dans lequel ledit traitement des paramètres de synchronisation retournés en réponse à une trame de signalisation comprend une comparaison desdits paramètres de synchronisation à des instants prédéterminés par rapport à une fin de la fenêtre de réception associée.

7. Procédé selon la revendication 6, dans lequel lesdits instants prédéterminés sont des points de départ respectivement de la fenêtre de réception (TOAWS) et d'une sous-fenêtre de réception (RNCWS) positionnée en fin de la fenêtre de réception.

8. Procédé selon la revendication 7, dans lequel RNCWS est préalablement fixé en fonction d'un type de service demandé par ledit terminal radio (4).

9. Procédé selon la revendication 7 ou 8, dans lequel le traitement des paramètres de synchronisation retournés en réponse à une trame de signalisation comprend une détermination, à l'unité de contrôle (1), d'une estimation d'instants de réception, pour chaque station radio (2), sur la base de N derniers paramètres de synchronisation retournés, N étant un entier supérieur ou égal à 1, et une détermination parmi lesdites estimations d'une valeur maximum TOAMAX correspondant à une estimation d'instants la plus précoce et une valeur minimum TOAMIN correspondant à une estimation d'instants la plus tardive, les deux valeurs TOAMIN et TOAMAX pouvant être égales, dans lequel on détermine une valeur d'ajustement telle que :
- si TOAMAX-TOAMIN est supérieur à TOAWS, la valeur d'ajustement est fixée à TOAWS-TOAMAX ;
- si TOAMAX-TOAMIN est inférieur ou égal à TOAWS,
o si TOAMIN est supérieur à RNCWS ou si TOAMIN est négatif,
■ si TOAMAX+(RNCWS-TOAMIN) est inférieur ou égal à TOAWS, la valeur d'ajustement est fixée à RNCWS-TOAMIN,
■ si TOAMAX+(RNCWS-TOAMIN) est supérieur à TOAWS, la valeur d'ajustement est fixée à TOAWS-TOAMAX ;
o si TOAMIN est positif ou nul et inférieur ou égal à RNCWS,
■ si TOAMAX est inférieur ou égal à TOAWS, la valeur d'ajustement est nulle,
■ si TOAMAX est supérieur à TOAWS, la valeur d'ajustement est fixée à TOAWS-TOAMAX ;
et dans lequel l'asservissement des instants d'émission des trames de données successives comprend une translation selon ladite valeur d'ajustement déterminée.

10. Procédé selon la revendication 9, dans lequel l'estimation d'instants de réception pour chaque station radio (2) est une moyenne glissante effectuée sur les N derniers paramètres de synchronisation retournés par ladite station radio.

11. Procédé selon l'une quelconque des revendications précédentes, dans lequel on modifie, après traitement, les paramètres de synchronisation retournés à l'unité de contrôle (1) selon le même asservissement que les instants d'émission des trames de données successives.

12. Procédé selon l'une quelconque des revendications précédentes, dans lequel on ignore, après traitement des paramètres de synchronisation, un paramètre de synchronisation retourné à l'unité de contrôle (1) en réponse à une trame de signalisation transmise par l'unité de contrôle avant le traitement des paramètres de synchronisation.

13. Procédé selon l'une quelconque des revendications 1 à 11, dans lequel on modifie, après traitement des paramètres de synchronisation retournés à l'unité de contrôle (1), un paramètre de synchronisation retourné à l'unité de contrôle en réponse à une trame de signalisation transmise par l'unité de contrôle avant traitement des paramètres de synchronisation, ladite modification comprenant le même asservissement que pour les instants d'émission des trames de données successives.

14. Procédé de contrôle de réception et de combinaison de trames à une unité de contrôle (1), les trames étant émises depuis au moins une station radio (2),
dans lequel l'unité de contrôle a une fenêtre de réception associée à chaque trame, positionnée dans le temps en fonction d'un repère temporel inséré dans ladite trame par chaque station radio,
dans lequel les trames incluent des trames de données (5), dans lesquelles le repère temporel est inséré par chaque station radio pour la synchronisation avec un terminal radio (4) émettant des données desdites trames de données,
dans lequel l'unité de contrôle est agencée pour détecter une trame de données reçue en dehors de la fenêtre de réception associée, et pour déterminer un instant de réception d'une trame de données par rapport à la fenêtre de réception associée,
et dans lequel l'unité de contrôle est agencée pour effectuer une combinaison des trames de données reçues de certaines au moins des stations radio et insérant un même repère temporel, à une date d'expiration d'un timer respectif, positionnée dans le temps en fonction de la fenêtre de réception associée,
le procédé comprenant les étapes suivantes exécutées par l'unité de contrôle dans une période de réception de trames de données successives :
- traiter les instants de réception déterminés ;
- asservir la date d'expiration du timer en fonction des instants de réception traités.

15. Procédé selon la revendication 14, dans lequel ledit traitement des instants de réception déterminés comprend une comparaison desdits instants de réception déterminés d'une trame de données (5) à des instants prédéterminés par rapport à une fin de la fenêtre de réception associée.

16. Procédé selon la revendication 15, dans lequel lesdits instants prédéterminés sont des points de départ respectivement de la fenêtre de réception (ULTOAWS) et d'une sous-fenêtre de réception (ULRNCWS) positionnée en fin de la fenêtre de réception.

17. Procédé selon la revendication 16, dans lequel ULRNCWS est préalablement fixé en fonction d'un type de service demandé par ledit terminal radio (4).

18. Procédé selon la revendication 16 ou 17, dans lequel le traitement des instants de réception déterminés pour une trame de données (5) comprend une détermination, à l'unité de contrôle (1), d'une estimation d'instants de réception, pour chaque station radio (2), de N derniers instants de réception déterminés, N étant un entier supérieur ou égal à 1, et une détermination, parmi lesdites estimations, d'une valeur maximum ULTOAMAX correspondant à une estimation d'instants la plus précoce et une valeur minimum ULTOAMIN correspondant à une estimation d'instants la plus tardive, les deux valeurs ULTOAMIN et ULTOAMAX pouvant être égales, dans lequel on détermine une valeur d'ajustement telle que :
- si ULTOAMAX-ULTOAMIN est supérieur à ULTOAWS, la valeur d'ajustement est fixée à ULTOAWS-ULTOAMAX ;
- si ULTOAMAX-ULTOAMIN est inférieur ou égal à ULTOAWS,
o si ULTOAMIN est supérieur à ULRNCWS ou si ULTOAMIN est négatif,
■ si ULTOAMAX+(ULRNCWS-ULTOAMIN) est inférieur ou égal à ULTOAWS, la valeur d'ajustement est fixée à ULRNCWS-ULTOAMIN,
■ si ULTOAMAX+(ULRNCWS-ULTOAMIN) est supérieur à ULTOAWS, la valeur d'ajustement est fixée à ULTOAWS-ULTOAMAX ;
o si ULTOAMIN est positif ou nul et inférieur ou égal à ULRNCWS,
■ si ULTOAMAX est inférieur ou égal à ULTOAWS, la valeur d'ajustement est nulle,
■ si ULTOAMAX est supérieur à ULTOAWS, la valeur d'ajustement est fixée à ULTOAWS-ULTOAMAX ;
et dans lequel l'asservissement de la date d'expiration du timer en fonction des instants de réception traités comprend une translation selon ladite valeur d'ajustement déterminée.

19. Procédé selon la revendication 18, dans lequel l'estimation d'instants de réception pour une station radio (2) est une moyenne glissante effectuée sur les N derniers instants de réception déterminés pour ladite station radio.

20. Procédé selon l'une quelconque des revendications 14 à 19, dans lequel on modifie, après traitement, les instants de réception des trames de données reçues à l'unité de contrôle (1) avant traitement, selon le même asservissement que la date d'expiration du timer.

21. Unité de contrôle (1) comprenant des moyens d'émission de trames vers au moins une station radio (2) et des moyens d'insertion d'un repère temporel dans chaque trame, chaque station radio ayant une fenêtre de réception respective associée à chaque trame, positionnée dans le temps en fonction dudit repère temporel, les trames émises incluant des trames de données (5), dans lesquelles le repère temporel est inséré pour la synchronisation avec un terminal radio (4) vers lequel chaque station radio émet des données desdites trames de données, et des trames de signalisation, l'unité de réception comprenant en outre des moyens pour recevoir de la part de chaque station radio une indication de réception d'une trame de données en dehors de la fenêtre de réception associée et des moyens de réception d'un paramètre de synchronisation retourné par une station radio en réponse à une trame de signalisation, ledit paramètre de synchronisation étant représentatif d'un instant de réception de ladite trame de signalisation par rapport à la fenêtre de réception associée,
l'unité de contrôle comprenant :
- des moyens pour émettre des trames de signalisation vers chaque station radio simultanément, dans une période d'émission de trames de données successives ;
- des moyens pour traiter les paramètres de synchronisation retournés ; et
- des moyens pour asservir les instants d'émission des trames de données successives en fonction des paramètres traités.

22. Unité de contrôle selon la revendication 21, dans laquelle l'émission des trames de signalisation vers chaque station radio (2) est périodique.

23. Unité de contrôle selon la revendication 22, dans laquelle l'émission des trames de signalisation vers chaque station radio (2) a une périodicité variable dans le temps.

24. Unité de contrôle selon la revendication 21, dans laquelle l'émission des trames de signalisation vers chaque station radio (2) est dans une proportion dépendant d'un nombre de trames retournées à l'unité de contrôle par certaines au moins des stations radio pour signaler une trame de données reçue en dehors de la fenêtre de réception associée sur une période d'émission de trames de données successives.

25. Unité de contrôle selon l'une quelconque des revendications 21 à 24, dans laquelle les moyens de traitement des paramètres de synchronisation retournés en réponse à une trame de signalisation comprennent une comparaison desdits paramètres de synchronisation à des instants prédéterminés par rapport à une fin de la fenêtre de réception associée.

26. Unité de contrôle selon la revendication 25, dans laquelle lesdits instants prédéterminés sont des points de départ respectivement de la fenêtre de réception (TOAWS) et d'une sous-fenêtre de réception (RNCWS) positionnée en fin de la fenêtre de réception.

27. Unité de contrôle selon la revendication 26, dans laquelle RNCWS est préalablement fixé en fonction d'un type de service demandé par ledit terminal radio (4).

28. Unité de contrôle selon la revendication 26 ou 27, dans laquelle les moyens de traitement des paramètres de synchronisation retournés en réponse à une trame de signalisation comprennent une détermination d'une estimation d'instants de réception, pour chaque station radio (2), sur la base de N derniers paramètres de synchronisation retournés, N étant un entier supérieur ou égal à 1, et une détermination parmi lesdites estimations d'une valeur maximum TOAMAX correspondant à une estimation d'instants la plus précoce et une valeur minimum TOAMIN correspondant à une estimation d'instants la plus tardive, les deux valeurs TOAMIN et TOAMAX pouvant être égales, l'unité de contrôle ayant en outre des moyens pour déterminer une valeur d'ajustement telle que :
- si TOAMAX-TOAMIN est supérieur à TOAWS, la valeur d'ajustement est fixée à TOAWS-TOAMAX ;
- si TOAMAX-TOAMIN est inférieur ou égal à TOAWS,
o si TOAMIN est supérieur à RNCWS ou si TOAMIN est négatif,
■ si TOAMAX+(RNCWS-TOAMIN) est inférieur ou égal à TOAWS, la valeur d'ajustement est fixée à RNCWS-TOAMIN,
■ si TOAMAX+(RNCWS-TOAMIN) est supérieur à TOAWS, la valeur d'ajustement est fixée à TOAWS-TOAMAX ;
o si TOAMIN est positif ou nul et inférieur ou égal à RNCWS,
■ si TOAMAX est inférieur ou égal à TOAWS, la valeur d'ajustement est nulle,
■ si TOAMAX est supérieur à TOAWS, la valeur d'ajustement est fixée à TOAWS-TOAMAX ;
et dans laquelle les moyens pour asservir les instants d'émission des trames de données successives comprennent une translation selon ladite valeur d'ajustement déterminée.

29. Unité de contrôle selon la revendication 28, dans laquelle l'estimation d'instants de réception pour chaque station radio (2) est une moyenne glissante effectuée sur les N derniers paramètres de synchronisation retournés par ladite station radio.

30. Unité de contrôle selon l'une quelconque des revendications 21 à 29, comprenant des moyens pour modifier, après traitement, les paramètres de synchronisation retournés selon le même asservissement que les instants d'émission des trames de données successives.

31. Unité de contrôle selon l'une quelconque des revendications 21 à 30, comprenant des moyens pour ignorer, après traitement des paramètres de synchronisation, un paramètre de synchronisation retourné en réponse à une trame de signalisation transmise avant le traitement des paramètres de synchronisation.

32. Unité de contrôle selon l'une quelconque des revendications 21 à 30, comprenant des moyens pour modifier, après traitement des paramètres de synchronisation retournés, un paramètre de synchronisation retourné à l'unité de contrôle en réponse à une trame de signalisation transmise par l'unité de contrôle avant traitement des paramètres de synchronisation, ladite modification comprenant le même asservissement que pour les instants d'émission des trames de données successives.

33. Unité de contrôle (1) comprenant des moyens de réception et de combinaison de trames, les trames étant émises depuis au moins une station radio (2),
l'unité de contrôle ayant une fenêtre de réception associée à chaque trame, positionnée dans le temps en fonction d'un repère temporel inséré dans ladite trame par chaque station radio,
les trames incluant des trames de données (5), dans lesquelles le repère temporel est inséré par chaque station radio pour la synchronisation avec un terminal radio (4) émettant des données desdites trames de données,
l'unité de contrôle ayant des moyens pour détecter une trame de données reçue en dehors de la fenêtre de réception associée, et pour déterminer un instant de réception d'une trame de données par rapport à la fenêtre de réception associée,
l'unité de contrôle comprenant en outre des moyens pour effectuer une combinaison des trames de données reçues de certaines au moins des stations radio et insérant un même repère temporel, à une date d'expiration d'un timer respectif, positionnée dans le temps en fonction de la fenêtre de réception associée,
l'unité de contrôle comprenant encore :
- des moyens pour traiter les instants de réception déterminés, dans une période de réception de trames de données successives ;
- des moyens pour asservir la date d'expiration du timer en fonction des instants de réception traités.

34. Unité de contrôle selon la revendication 33, dans laquelle les moyens de traitement des instants de réception déterminés comprennent une comparaison desdits instants de réception déterminés d'une trame de données (5) à des instants prédéterminés par rapport à une fin de la fenêtre de réception associée.

35. Unité de contrôle selon la revendication 34, dans laquelle lesdits instants prédéterminés sont des points de départ respectivement de la fenêtre de réception (ULTOAWS) et d'une sous-fenêtre de réception (ULRNCWS) positionnée en fin de la fenêtre de réception.

36. Unité de contrôle selon la revendication 35, dans laquelle ULRNCWS est préalablement fixé en fonction d'un type de service demandé par ledit terminal radio (4).

37. Unité de contrôle selon la revendication 35 ou 36, dans laquelle les moyens de traitement des instants de réception déterminés pour une trame de données (5) comprennent une détermination d'une estimation d'instants de réception, pour chaque station radio (2), de N derniers instants de réception déterminés, N étant un entier supérieur ou égal à 1, et une détermination, parmi lesdites estimations, d'une valeur maximum ULTOAMAX correspondant à une estimation d'instants la plus précoce et une valeur minimum ULTOAMIN correspondant à une estimation d'instants la plus tardive, les deux valeurs ULTOAMIN et ULTOAMAX pouvant être égales, l'unité de contrôle ayant en outre des moyens pour déterminer une valeur d'ajustement telle que :
- si ULTOAMAX-ULTOAMIN est supérieur à ULTOAWS, la valeur d'ajustement est fixée à ULTOAWS-ULTOAMAX ;
- si ULTOAMAX-ULTOAMIN est inférieur ou égal à ULTOAWS,
o si ULTOAMIN est supérieur à ULRNCWS ou si ULTOAMIN est négatif,
■ si ULTOAMAX+(ULRNCWS-ULTOAMIN) est inférieur ou égal à ULTOAWS, la valeur d'ajustement est fixée à ULRNCWS-ULTOAMIN,
■ si ULTOAMAX+(ULRNCWS-ULTOAMIN) est supérieur à ULTOAWS, la valeur d'ajustement est fixée à ULTOAWS-ULTOAMAX;
o si ULTOAMIN est positif ou nul et inférieur ou égal à ULRNCWS,
■ si ULTOAMAX est inférieur ou égal à ULTOAWS, la valeur d'ajustement est nulle,
■ si ULTOAMAX est supérieur à ULTOAWS, la valeur d'ajustement est fixée à ULTOAWS-ULTOAMAX ;
et dans laquelle les moyens pour asservir la date d'expiration du timer en fonction des instants de réception traités comprennent une translation selon ladite valeur d'ajustement déterminée.

38. Unité de contrôle selon la revendication 37, dans laquelle l'estimation d'instants de réception pour une station radio (2) est une moyenne glissante effectuée sur les N derniers instants de réception déterminés pour ladite station radio.

39. Unité de contrôle selon l'une quelconque des revendications 33 à 38, comprenant des moyens pour modifier, après traitement, les instants de réception des trames de données (5) reçues à l'unité de contrôle avant traitement, selon le même asservissement que la date d'expiration du timer.
